# EUROPEAN PATENT SPECIFICATION

(11) **EP 1 570 201 B1**
(45) Date of publication and mention of the grant of the patent: **23.09.2009**
(21) Application number: 03776699.5
(22) Date of filing: 20.11.2003
(51) Int. Cl.: F16L 33/04

(54) **HOSE CLAMP**
SCHLAUCHKLEMME
COLLIER DE SERRAGE

(30) Priority: 29.11.2002 US 429534 P
(43) Date of publication of application: 07.09.2005
(73) Proprietor: Cousineau, Martin, Repentigny, Québec J6A 2C2 (CA)
(72) Inventor: Cousineau, Martin, Repentigny, Québec J6A 2C2 (CA)
(74) Representative: Patentanwaltskanzlei Matschnig & Forsthuber OG
(86) International application number: PCT/CA2003/001801
(87) International publication number: WO 2004/051132

(56) References cited:
- US-A- 4 429 847
- US-A- 4 819 307
- US-A- 5 010 626
- US-A- 5 329 673

## Description

### FIELD OF THE INVENTION

The present invention concerns clamps, more particularly to clamps for use with hoses.

### BACKGROUND OF THE INVENTION

Hose clamps are well known and widely used in industry and are practical and reliable in applications requiring large controllable holding force. Conventionally, hose clamps include a loop of resilient material such as stainless steel, steel or plastic, which loops around the outside wall of a hose and applies a clamping force thereto. However, there exist applications where it is desirable to apply and maintain constant torque forces against the hose clamp so as to retain high clamping forces during expansion and contraction of the hose during extremes of temperature and pressure. Such temperature and pressure fluctuations are typical for hoses used on, for example, automobile exhaust systems. In addition, mechanical stresses such as vibrations and dynamic stresses, normally encountered during operation of the automobile engine, are sufficient to dislodge hose clamps that are not clamped by sufficiently strong clamping forces.

A number of designs for hose clamps exist, including:
- US Patent No. 4,429,847, issued February 7, 1984 to Jablonski et al. for "Spring bypass assembly" discloses a spring bypass assembly with an adjustable stop means to limit the separation of the rim halves of the clamp when the pipe expands;
- US Patent No. 4,819,307, issued April 11, 1989 to Turner for "Hose clamp" teaches a hose clamp having both upstanding planar ears being tightened toward each other by a bolt and spring washers acting on a fixed head and an adjustable head abutting the ears;
- US Patent No. 5,010,626, issued April 30, 1991 to Dominguez for "Hose clamp with flanged captive tensioning nut and pivoted bridge element";
- US Patent No. 5,329,673, issued July 19, 1994 to Mason for "Self tightening hose clamp with centered spring" discloses a self tightening hose clamp with a T-bolt nut assembly having a helical spring axially centered on the bolt via a sleeve;
- US Patent No. 5,720,086, issued February 24, 1998 to Eliasson et al. for "Clamping collar"; and
- WO 01/27516A1, published April 19, 2001 to Dominguez.

These hose clamps, however, suffer from a number of important disadvantages. Each uses a bolt that applies a clamping force directly against a shoulder of a loop end. During application of high torque forces during the clamping operation, the force direction may not be axially applied in a constant manner due to deformation of the shoulder by the clamping forces. This non-constant application of torque force across the loop end may be prone to failure during temperature related expansion and contraction of the hose. In addition, some hose clamp designs use T-bolts and constant tension springs, which limit the amount of force that can be applied during clamping. Disadvantageously, most constant tension springs are made of steel, which is prone to corrosion and freezing under normal operations. Other types of hose clamps use worm gears to apply torque forces to the clamp, which worm gears may be unsuitable in operations requiring constant high clamping torque.

Thus there is a need for an improved heavy-duty hose clamp that can be used to apply and maintain high clamping forces.

### SUMMARY OF THE INVENTION

The present invention is directed towards a solution to the aforesaid problems by providing a heavy-duty hose clamp with a novel spacer that allows a user to axially apply constant significant torque forces during a clamping operation. A novel combination of the spacer, capture nuts and a number of axially aligned disc springs maintain constant high clamping forces around the hose. The capture nuts are shaped to allow inward transfer of the clamping forces from a bolt to looped ends to close the gap therebetween and to reduce the clamp loop around the hose. Advantageously, the clamp significantly increases the amount of working torque forces that are safely available to the user up to about 51 N-m (450 in-Ibs). The hose clamp of the present invention is simple to operate and is manufactured from inexpensive, lightweight and readily available materials, such as stainless steel. The hose clamp can be custom made to fit many hose dimensions, up to about 90 cm (35 inches) in diameter, and uses readily available tools to apply the clamping forces to the bolt. In addition, the user can select many combinations of the disc springs' orientation to apply a variety of different clamping deflections for the clamping operation required.

In a first aspect of the present invention, there is provided a clamp for a hose, the clamp including a loop for disposing around the hose and having first and second axially spaced apart looped ends, each of the first and second looped ends having an inner curved portion disposed inwardly towards each other, the clamp comprising: a force generator, for drawing together the first and second looped ends, and including at least one disc spring, a bolt having a first bolt end and a second bolt end, and a first capture nut mounted in the first looped end and a second capture nut mounted in the second looped end, the first capture nut including a non-threaded axial bore and the second capture nut including a threaded axial bore, the first looped end including first and second holes located in respective first outer and inner faces thereof, and the second looped end includes third and fourth holes located in respective second outer and inner faces thereof, the holes being axially aligned with each other and the first and second outer faces being angled inwardly towards each other and the first and second inner faces being curved and disposed inwardly towards each other, the bolt passing through the first, second, third and fourth holes and including a threaded portion and a non-threaded portion, the non-threaded portion extending through and away from the first looped end; and a spacer member mounted, mounted on the bolt between the disc spring and the first looped end, for axially transferring a clamping force from the force generator to the first and second looped ends, the disc spring and the spacer member being slidably mounted on the non-threaded portion with the disc spring being located near the first bolt end, and being characterized in that each of the first and second capture nuts has a curved end and a stem portion, the curved end cooperating with a respective one of the curved portions to allow the clamping force to axially draw together the first and second looped ends and clamp the hose, with the spacer member being in direct contact with the first capture nut.

Typically, the spacer member includes a cylindrical collar with an axial bore sized to accommodate the bolt therein, the cylindrical collar having a force receiver end and a force transfer end.

Typically, the stem portion of the first capture nut is disposed towards the first hole of the first looped end and abuts the force transfer end.

Typically, the second bolt end includes a stop. The stop is a lock nut, a Stover nut or a nylon insert nut.

Typically, the Stover nut or the nylon insert nut are integral with the stem portion of the second capture nut.

Typically, the first hole of the first looped end is larger than the second hole of the first-looped end.

Typically, the clamp loop, when viewed in cross section, includes a planar portion and two ends that are angled away from the surface of the hose.

Typically, the clamp, as described above, includes a plurality of paired disc springs.

Typically, a plate is hingeable connected to the first looped end, and the plate includes a guide portion for guiding the moveable first and second looped ends when moving towards and away from each other during clamping.

In an alternative construction, there is provided a clamp having a clamp loop for receiving therein an item for clamping, the clamp loop being disposable axially along a main axis of the item, the clamp loop having first and second moveable looped ends, each looped end having respective inner and outer faces, the inner faces being continuous with an inner periphery of the clamp loop, the outer faces being continuous with an outer periphery of the clamp loop, the inner faces, when in a non-clamping configuration, defining a gap therebetween, the clamp loop being sufficiently resilient to allow the moveable looped ends to move towards each other, when subjected to clamping forces, to attain a clamping configuration in which the item is clamped between the inner periphery of the clamp loop, the looped ends having respective first axially aligned openings for passing therethrough a force generator, the force generator cooperating with one of the outer faces to apply an inwardly directed force thereto to move the moveable looped ends towards each other, the clamp comprising: a spacer axially aligned with the first axially aligned openings, the spacer cooperating with one of the outer faces to axially transfer the inwardly directed force from the force generator to the moveable looped ends; and at least one disc spring axially aligned with the spacer and the force generator, the disc springs being cooperable with the force generator to transfer the inwardly directed force to the moveable looped, ends, the disc springs being sufficiently resilient to contract against each other when the inwardly directed clamping force is applied thereto.

### BRIEF DESCRIPTION OF THE DRAWINGS

Further aspects and advantages of the present invention will become better understood with reference to the description in association with the following Figures, wherein:
**Figure 1** is a perspective view of an embodiment of a hose clamp of the present invention;
**Figure 1a** is a cross section view taken along line 1a-1a of Figure 1;
**Figure 2** is a side view of the hose clamp of Figure 1;
**Figure 3a** is a partial cutaway view of a number of disc springs cooperating with a bolt of Figure 1;
**Figure 3b** is a perspective view of a spacer member;
**Figure 4a** is a perspective view of a looped end;
**Figure 4b** is a side view of a looped end with a capture nut located therein;
**Figure 5a** is a side view of one capture nut;
**Figure 5b** is an end view taken along line 5b of Figure 5a;
**Figure 5c** is a side view of a unitary capture nut/Stover nut;
**Figure 5d** is a side view of a unitary capture nut/Nylon insert;
**Figure 6a** is a side view of another capture nut;
**Figure 6b** is an end view taken along line 6b of Figure 6a;
**Figure 7** illustrates a number of disc spring configurations viewed in cross section;
**Figure 8** is a top view of a hingeable plate;
**Figure 9** is a side view of a second embodiment of the hose clamp;
**Figure 9a** is a perspective view of a T-bolt engaged a looped end;
**Figure 9b** is a side view of Figure 9a;
**Figure 9c** is a partial cutaway side view of a nut of Figure 9;
**Figure 10** is a side view of a third embodiment of the hose clamp; and
**Figure 11** is a side view of a fourth embodiment of the hose clamp.

### DETAILED DESCRIPTION OF THE PREFERRED EMBODIMENTS

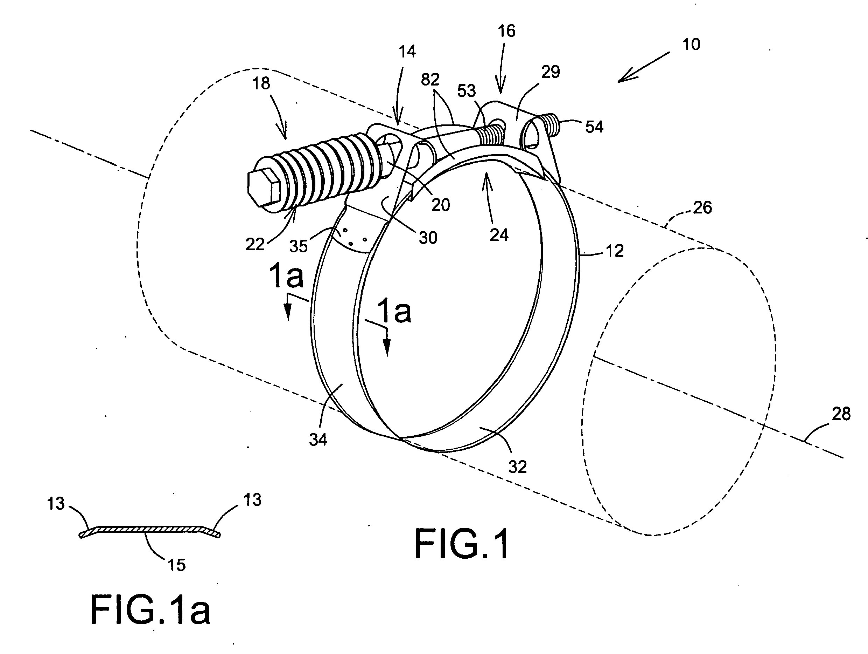

An embodiment of a hose clamp 10 of the present invention is shown in Figure 1. Broadly speaking, the clamp 10 includes a clamp loop 12, two moveable looped ends 14 and 16, a force generator 18, a separator or spacer member 20, a plurality of disc springs 22, and a hingeable plate 24.

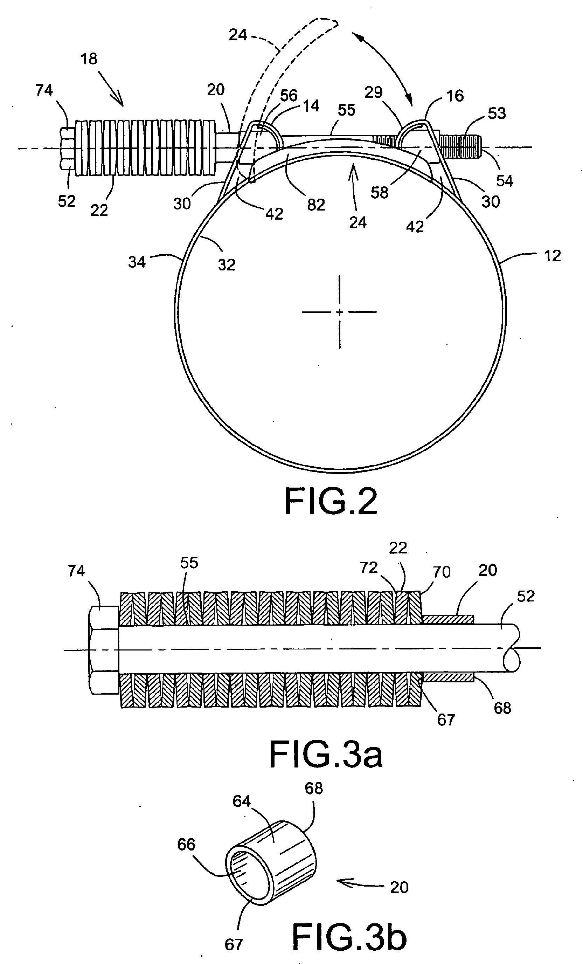

Referring now to Figures 1 and 2, in a typical application, an item for clamping, for example a high-pressure, heavy-duty hose 26 is received in the clamp loop 12. The clamp loop 12 is disposable axially along a main axis 28 of the hose 26 and annularly around the hose 26. The clamp loop 12 is typically made of stainless steel, which has sufficient resilience to withstand high operating torque forces applied thereto. The clamp loop 12 includes the two moveable looped ends 14 and 16, one of which will now be described in detail with reference to Figures 1 and 2. The looped end 14 has an inner face 29 and an outer face 30. The inner face 29 is continuous with an inner periphery surface 32 of the clamp loop 12. The outer face 30 is continuous with an outer periphery surface 34 of the clamp loop 12 and is angled inwardly. Typically, the clamp loop 12 is machined from a single piece of material, the ends of which are looped back on themselves and connected to the outer periphery surface 34 by a securing means 35 known to those skilled in the art. An example of such securing means include stamping, welding or staples and the like.. In a default, non-clamping configuration, the inner faces 29 are axially spaced apart from each other and define a gap therebetween. The clamp loop 12 materials are sufficiently resilient to allow the moveable looped ends 14 and 16 to move towards each other, when subjected to clamping forces. In a clamping configuration, the hose 26 is clamped between the inner periphery surface 32 of the clamp loop 12 by the force generator 18 acting against the moveable looped ends 14 and 16.

As best illustrated in Figure 1a, the clamp loop 12, in a clamping configuration when viewed in cross section, includes two ends 13 that are curved away from the hose 26 surface and a generally planar portion 15 which rests against the surface of the hose 26. The two curved ends 13 prevent the clamp loop 12 from biting into the hose 26 during clamping and reduce damage to the surface of the hose 26.

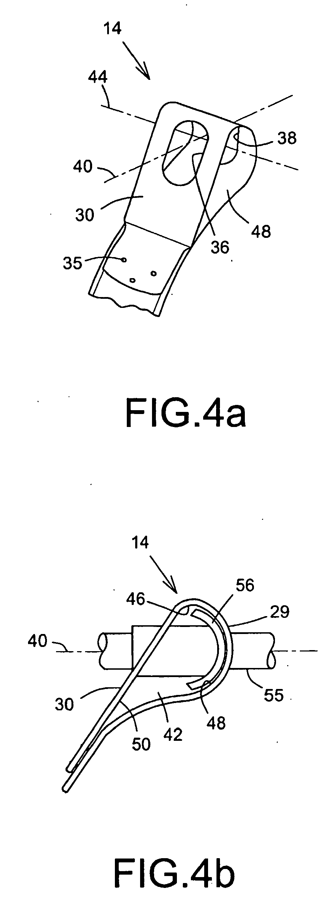

Referring now to Figures 4a and 4b, each of the looped ends 14 and 16 has two openings or holes 36 and 38 disposed therein. The holes 36 and 38 are axially aligned with each other and with the holes of the other moveable looped end. The holes 36 and 38 have an axis 40, which are aligned generally perpendicularly to the main axis 28 of the hose 26 during clamping. The hole 36 is disposed outwardly, whereas the hole 38 is disposed inwardly towards the gap. The hole 36 is generally of a larger size than hole 38 and is elliptical to allow the user to move the force generator 18 up and down to allow the force generator to be aligned with the hole 38. In addition, each of the looped ends 14 and 16 include a second opening 42, which has a second opening axis 44 that is generally perpendicular to the axis 40 and which is generally parallel to the main axis of the hose 26. The moveable looped ends 14 and 16 each have an inner surface 46 that defines the second opening 42. The inner surface 46 has a curved portion 48 and a generally planar portion 50. The curved portion 48 is disposed inwardly towards the other looped end and the gap.

Referring to Figures 2 and 3a, the force generator 18 passes through the holes 36 and 38 and cooperates with one of the outer faces 30 to apply an inwardly directed force thereto to draw the moveable looped ends 14 and 16 towards each other. In this embodiment, the force generator 18 is a bolt 52 that is sized to pass through each of the holes 36 and 38. The bolt 52 typically includes threads along a threaded portion 53 and a non-threaded smooth portion 55 on which the disc springs 22 are slidably mounted to allow for their smooth compression and expansion. The bolt 52 also includes a first bolt end 74 and a second bolt end 54.

Referring to Figures 2, 5a, 5b, 6a and 6b, the force generator 18 also includes two capture nuts 56 and 58 are positioned in the second openings 42. Both capture nuts 56 and 58 cooperate with the inner surface of the looped ends 14, 16 to generate the inwardly directed forces thereon. The capture nut 56 has a non-threaded axial bore 57, whereas the capture nut 58 has a threaded axial bore 59, both bores 57 and 59 are sized to allow engagement with the bolt 52. The bolt 52, in the clamping configuration extends through each of the bores 57 and 59, the end 54 of the threaded bolt extends outwardly from capture nut 58. Both capture nuts 56 and 58 include a curved end portion 60 and a stem portion 62. The curved end portion 60 cooperates with the curved portion 48 of the looped end 14, 16 and is disposed towards the gap. The stem portion 62 is disposed towards the planar portion 50 of the looped ends 14, 16. The stem 62 of the capture nut 56, located in the looped end 14, is cooperable with the spacer 20 to receive the inwardly directed force thereagainst. Both capture nuts 56 and 58 have elongate sides 61 and a shorter side 63. A projection 65 extends outwardly from the shorter side 63 of the capture nut 56 and acts to reduce up and down movement of the hingeable plate 24 when the clamp is in operation.

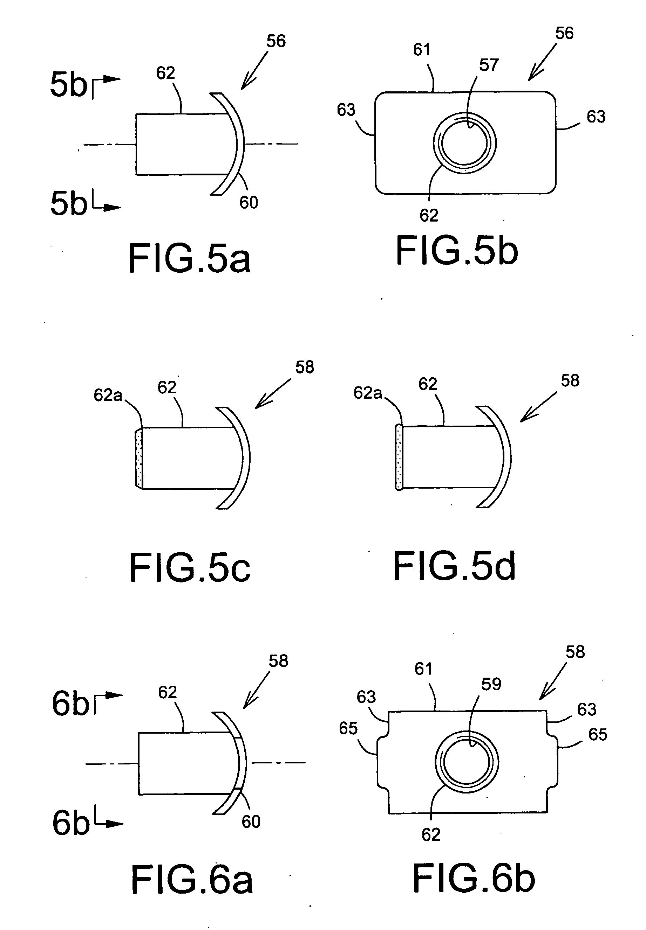

As shown in Figures 5c and 5d, a stop 62a in the form of a lock nut, a Stover nut or a nylon insert nut may be added to the bolt end 54 after torquing to damp against major vibrations, and rests against the stem 62 of the capture nut 58. Alternatively, the capture nut and the stop 62a may be a unitary piece 62a, in which the Stover nut and nylon insert nut are integral with the stem 62.

Referring to Figures 2, 3a, and 3b, the spacer member 20 of the present invention is axially aligned with the holes 36 and 38 in the looped ends 14, 16. The spacer member 20 is orientated towards the outer face of the looped end 14 to axially transfer the inwardly directed force from the bolt 52 to move the moveable looped ends 14, 16 together. The spacer member 20 is a cylindrical collar 64 with an axial bore 66 of sufficient size to slide over a non-threaded portion of the threaded bolt 52. The cylinder 64 has a force receiver end 67 and a force transfer end 68. The force receiver end 67 abuts a first face 70 of one of the disc springs 22. The force transfer end 68 abuts the stem portion 62 of the capture 56. Both the ends 66 and 68 have planar surfaces for contacting the stem 62 and the first face 70 of the disc spring 22.

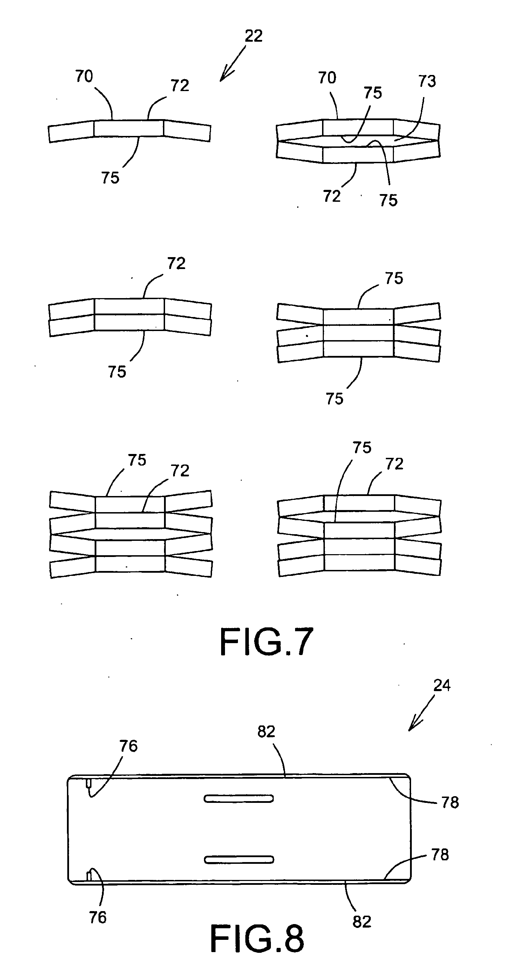

Referring to Figures 3a and 7, the disc springs 22 are axially aligned with the spacer member 20 and the bolt 52 and transfer the inwardly directed force to the moveable looped ends 14, 16. In this embodiment, a number of the disc springs 22 are arranged in pairs along the non-threaded portion of the bolt 52. Each pair of the disc springs 22 includes the first face 70, a second face 72 and a central space 73 defined by a generally concave inner face 75. The second face 72 cooperates with the bolt end head 74 to receive the clamping force thereagainst. One skilled in the art will recognize that the disc springs 22 can be used in many different configurations (as shown in Figure 7) and that they have sufficient resilience to contract against each other when forces are applied to one or both faces 70 and 72. One skilled in the art will also recognize that one disc spring 22 may be used with the bolt 52 such that either of the first or second faces 70, 72 and the inner face 75 receives the clamping force from the bolt end head 74. When the hose 26, after clamping, expands outwardly such as during operations when the hose 26 carries high temperature, high pressure fluids such as water, steam, or oil, the outward expansion forces act against the inner periphery surface 32 of the clamp loop 12 and act against the inwardly directed clamping force to maintain constant clamping force. The disc springs 20 have sufficient resilience to deform during the expansion such that the size of the central space 73 decreases thereby taking up the increase in the inwardly directed force of the force generator 18 to compensate for the expansion of the hose 26. Similarly, as the hose 26 cools, it will contract and the central space 73 of the disc springs 22 will increase in size, the disc springs 22 attaining their dish-like appearance and the force generator 18 will retain its maximum constant clamping force against the disc springs 22 and against the hose 26. Conventional hose clamps have a maximum clamping torque of about 18 N-m (160 in-lbs) torque working force, whereas with the hose clamp 10 of the present invention, this increases significantly up to about 51 N-m (450 in-Ibs) torque working force.

Referring to Figures 1, 2 and 8, the hingeable plate 24 is hingeably connected to one of the looped ends 14. The plate 24 is continuous with the inner clamp loop periphery 32 and includes two inward projections 76. The plate 24 may also include a single bar in place of the two projections 76, which may be positioned across the plate to lock the plate 24 in place during clamping. The hingeable plate 24 acts as a bridge across the gap and includes a guide portion 78 located on an outer face 80 for guiding the moveable looped ends 14 and 16 along a path of travel towards and away from each other during clamping. The guide portion 78 includes two opposing edge walls 82 axially aligned with the openings 36 and 38. The plate 24 allows the user a means by which the looped ends 14 and 16 can be aligned and allows maneuverability of the clamp 10 along the hose 26 before clamping. The plate 24 may optionally be swung out of alignment (as shown in outline in Figure 2) with the looped ends 14 and 16 should the user need to completely disengage the hose clamp 10 from the hose 26.

### Operation

Referring to Figures 1 and 2, generally, the hose clamp 10 is supplied in a default configuration with the bolt 52 disconnected from the looped ends 16 and 18 and the capture nuts 56 and 58. Depending on the torque that is required, the user selects the appropriate number of disc springs 22 and adds them to the shaft of the bolt 52 and slides the spacer member 20 onto the bolt 52 shaft. The bolt 52 is positioned adjacent the non-threaded bore 57 of the capture nut 56 and with the hose 26 to be clamped in place snuggly against the inner periphery 32, the operator aligns the bolt end 54 with the hole 38 and the threaded bore 59 of the capture nut 58. The user then applies a turning force to the bolt end 74 causing the moveable ends 14 and 16 to slide along the plate 24 towards each other thereby tightening the clamp 10 around the hose 26 to the required torque. Alternatively, the clamp 10, with the disc springs 22, the spacer member 20 and capture nuts 56 and 58 aligned, is slipped over the hose 26, which is connected to a fluid source (not shown). The clamp 10 is then tightened as described.

### Alternatives

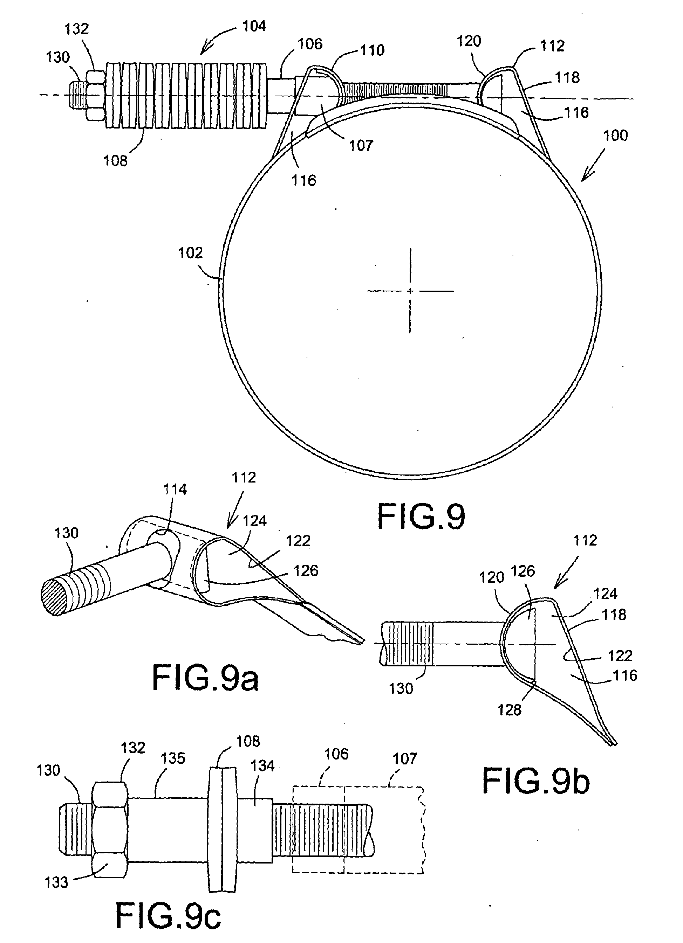

The first embodiment of the hose clamp 10 is useful in many clamping operations. There may be applications, such as for hoses in areas of limited accessibility that require the use of a T-bolt in combination with the disc springs, the spacer member and a hingeable plate which has limited movement. An example not part to the invention 100, illustrated in Figure 9, operates in essentially the same way as the first embodiment 10 and includes a clamp loop 102, a force generator 104, a spacer member 106, a capture nut 107, disc springs 108, and two moveable looped ends 110 and 112. The differences between 10 and 100 will now be described with reference to Figures 9a, 9b and 9c.

The looped end 112 includes a hole 114, an opening 116, a generally planar outward face 118 and a curved inward face 120. A shaped inner surface 122 defines the second opening 116, a planar portion 124 of which lies adjacent a T-bolt end 126. During clamping, the T-bolt end 126 pushes against a curved surface 128 of the second opening 116 and inwardly transfers the clamping force as the force generator 104 acts inwardly against the looped end 110, as described for the clamp 10. The force generator 104 includes an elongated threaded bolt portion 130 and a nut 132 mounted on the bolt threads.

As best illustrated in Figure 9c, the nut 132 has a smooth outer surface 134, on which the disc springs 108 (only two are shown) are mounted for sliding and abutment against the spacer member 106, and a threaded bore (not shown) through which the bolt 130 passes during clamping. Unlike with the clamp 10, turning the bolt 130 causes the disc springs 108 to move along the smooth surface 134 of the nut 132 towards the spacer member 106, while the nut 132 moves down the bolt 130 shaft. The nut 132 may alternatively include a nut head 133 that is separate from a smooth surfaced sleeve 135 and still work the same way as the unitary nut 132.

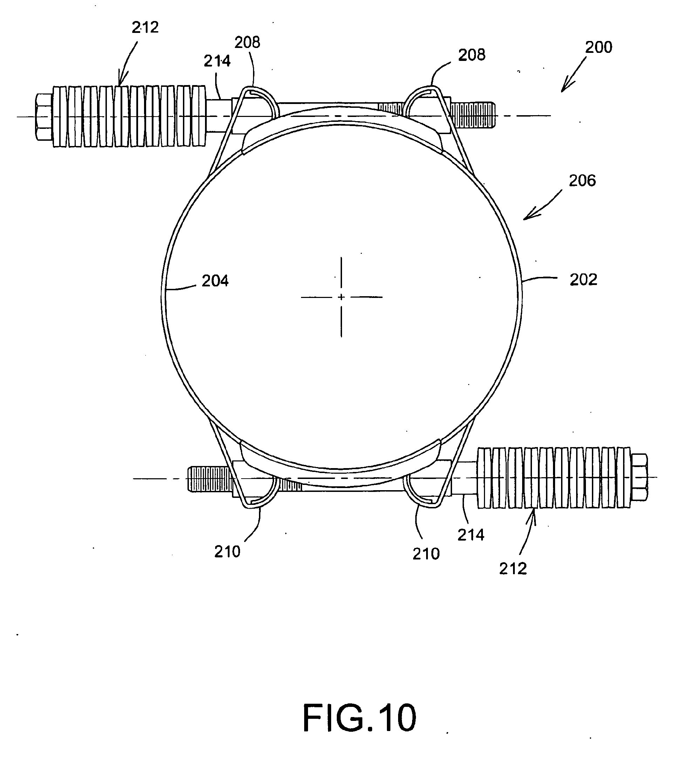

A second embodiment of a hose clamp 200 is illustrated in Figure 10 and operates in the same way as the first embodiment of the hose clamp 10. There may be clamping applications that require the use of a hose clamp loop that has two gaps between two sets of movable looped ends. The hose clamp 200 includes first and second clamp portions 202 and 204, which together form a clamp loop 206. Two sets of moveable looped ends 208 and 210 are moveable by two force generators 212 with two spacer members 214.

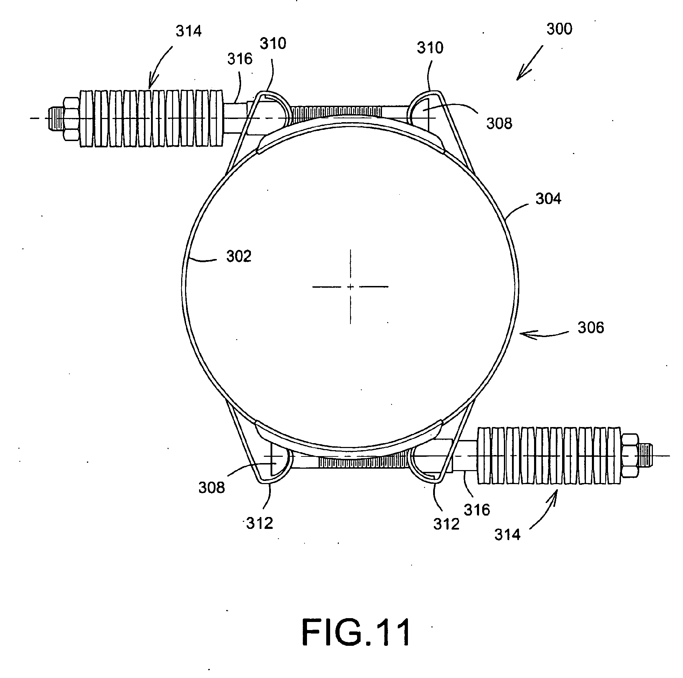

A further example, not part of the invention, of a hose clamp 300 is illustrated in Figure 11 and is structurally similar to the second embodiment 200. The hose clamp 300 includes first and second clamping portions 302 and 304, which together form a clamp loop 306. Two T-bolts 308 are used together with two sets of moveable looped ends 310 and 312, which are moveable by two force generators 314 with two spacer members 316.

## Claims

1. A clamp (10) for a hose (26), the clamp (10) including a loop (12) for disposing around the hose (26) and having first and second axially spaced apart looped ends (14,16), each of the first and second looped ends (14,16) having an inner curved portion (48) disposed inwardly towards each other, the clamp (10) comprising:
- a force generator (18), for drawing together the first and second looped ends (14,16), and including at least one disc spring (22), a bolt (52) having a first bolt end (74) and a second bolt end (54), and a first capture nut (56) mounted in the first looped end (14) and a second capture nut (58) mounted in the second looped end (16), the first capture nut (56) including a non-threaded axial bore (57) and the second capture nut (58) including a threaded axial bore (59), the first looped end (14) including first and second holes (36,38) located in respective first outer and inner faces (30, 29) thereof, and the second looped end (16) includes third and fourth holes (38,36) located in respective second outer and inner faces (30, 29) thereof, the holes (36,38) being axially aligned with each other and the first and second outer faces (30) being angled inwardly towards each other and the first and second inner faces (29) being curved and disposed inwardly towards each other, the bolt (52) passing through the first, second, third and fourth holes (36,38) and including a threaded portion (53) and a non-threaded portion (55), the non-threaded portion (55) extending through and away from the first looped end (14); and
- a spacer member (20), mounted on the bolt (52) between the disc spring (22) and the first looped end (14), for axially transferring a clamping force from the force generator (18) to the first and second looped ends (14, 16), the disc spring (22) and the spacer member (20) being slidably mounted on the non-threaded portion (55) with the disc spring (22) being located near the first bolt end (74),
and being **characterized in that** each of the first and second capture nuts (56,58) has a curved end (60) and a stem portion (62), the curved end (60) cooperating with a respective one of the curved portions (48) to allow the clamping force to axially draw together the first and second looped ends (14,16) and clamp the hose (26), with the spacer member (20) being in direct contact with the first capture nut (56).

2. The clamp (10), according to claim 1, in which the spacer member (20) includes a cylindrical collar (64) with an axial bore (66) sized to accommodate the bolt (52) therein, the cylindrical collar (64) having a force receiver end (67) and a force transfer end (68).

3. The clamp (10), according to claim 2, in which the stem portion (62) of the first capture nut (56) is disposed towards the first hole (36) of the first looped end (14) and abuts the force transfer end (68).

4. The clamp (10), according to claim 3, in which the second bolt end (75) includes a stop (62a).

5. The clamp (10), according to claim 4, in which the stop (62a) is a lock nut, a Stover nut or a nylon insert nut.

6. The clamp (10), according to claim 5, in which the Stover nut or the nylon insert nut are integral with the stem portion (62) of the second capture nut (58).

7. The clamp (10), according to claim 1, in which the first hole (36) of the first looped end (14) is larger than the second hole (38) of the first looped end (14).

8. The clamp (10), according to claim 1, in which the clamp loop (12), when viewed in cross section, includes a planar portion (15) and two ends (13) that are angled away from the surface of the hose (26).

9. The clamp (10), according to claim 1, includes a plurality of paired disc springs (22).

10. The clamp (10), according to claim 1, in which a plate (24) is hingeably connected to the first looped end (14).

11. The clamp (10), according to claim 10, in which the plate (24) includes a guide portion (78) for guiding the moveable first and second looped ends (16,18) when moving towards and away from each other during clamping.

## Patentansprüche

1. Schelle (10) für einen Schlauch (26), mit einem um den Schlauch (26) zu legenden Ring (12) mit einem ersten und einem zweiten Schlaufenende (14, 16) in axialem Abstand zueinander, wobei das erste und zweite Schlaufenende (14,16) jeweils einen inneren gekrümmten Bereich (48) haben und diese Bereiche einwärts zueinander angeordnet sind, wobei die Schelle (10) aufweist:
- einen Krafterzeuger (18) zum Zusammenziehen des ersten und des zweiten Schlaufenendes (14, 16), welcher zumindest eine Tellerfeder (22), einen Bolzen (52) mit einem ersten Bolzenende (74) sowie einem zweiten Bolzenende (54), eine in dem ersten Schlaufenende (14) befestigte erste Fangmutter (56) und eine in dem zweiten Schlaufenende (16) befestigte zweite Fangmutter (58) aufweist, wobei die erste Fangmutter (56) eine gewindelose axiale Bohrung (57) aufweist und die zweite Fangmutter (58) ein axiale Bohrung (59) mit Gewinde aufweist, das erste Schlaufenende (14) eine erste und eine zweite Öffnung (36, 38) aufweist, die sich in einer ersten Außenfläche (30) bzw. einer ersten Innenfläche (29) des Schlaufenendes befinden, und das zweite Schlaufenende (16) eine dritte und eine vierte Öffnung (38, 36) aufweist, die sich in einer zweiten Außenfläche (30) bzw. einer zweiten Innenfläche (29) des Schlaufenendes befinden, wobei die Öffnungen (36, 38) untereinander axial ausgerichtet sind und die erste und die zweite Außenfläche (30) zueinander einwärts abgewinkelt sind und die erste und zweite Innenfläche (29) gekrümmt und einander einwärts zugewandt sind, wobei der Bolzen (52) durch die erste, zweite, dritte und vierte Öffnung (36, 38) verläuft und einen Gewindeteil (53) sowie einen gewindelosen Teil (55), der sich durch das erste Schlaufenende (14) und von diesem weg erstreckt, aufweist; und
- ein auf dem Bolzen (52) zwischen der Tellerfeder (22) und dem ersten Schlaufenende (14) angebrachtes Abstandsstück (20) zum axialen Weiterleiten einer Zwingkraft von dem Krafterzeuger (18) auf das erste und das zweite Schlaufenende (14, 16), wobei die Tellerfeder (22) und das Abstandsstück (20) verschieblich auf dem gewindelosen Teil (55) angebracht sind, wobei sich die Tellerfeder (22) nahe dem ersten Bolzenende (74) befindet,
und **dadurch gekennzeichnet ist, dass** die erste und die zweite Fangmutter (56, 58) jeweils einen Schaftteil (62) sowie jeweils ein gekrümmtes Ende (60) aufweisen, welche Enden (60) mit jeweils einem der gekrümmten Bereiche (48) zusammenwirken, damit die Zwingkraft das erste und das zweite Schlaufenende (14, 16) axial zusammenziehen und den Schlauch (26) festklemmen kann, wobei das Abstandsstück (20) direkten Kontakt mit der ersten Fangmutter (56) hat.

2. Schelle (10) nach Anspruch 1, bei welcher das Abstandsstück (20) einen zylindrischen Kragen (64) mit einer axialen Bohrung in für den Bolzen (52) Platz bietender Größe sowie mit einem Kraftaufnahmeende (67) und einem Kraftweiterleitungsende (68) beinhaltet.

3. Schelle (10) nach Anspruch 2, bei welcher der Schaftteil (62) der ersten Fangmutter (56) zu der ersten Öffnung (36) des ersten Schlaufenendes (14) hin angeordnet ist und an das Kraftweiterleitungsende (68) anstößt.

4. Schelle (10) nach Anspruch 3, bei welcher das zweite Bolzenende (75) einen Stopper (62a) beinhaltet.

5. Schelle (10) nach Anspruch 4, bei welcher der Stopper (62a) eine Sicherungsmutter, eine Stover-Mutter oder eine Nylon-Einpressmutter ist.

6. Schelle (10) nach Anspruch 5, bei welcher die Stover-Mutter oder Nylon-Einpressmutter Bestandteil des Schaftteils (62) der zweiten Fangmutter (58) ist.

7. Schelle (10) nach Anspruch 1, bei welcher die erste Öffnung (36) des ersten Schlaufenendes (14) größer als die zweite Öffnung (38) des ersten Schlaufenendes (14) ist.

8. Schelle (10) nach Anspruch 1, bei welcher der Schellenring (12) hinsichtlich seines Querschnitts einen flachen Teil (15) und zwei Enden (13) aufweist, die von der Oberfläche des Schlauchs (26) abgewinkelt sind.

9. Schelle (10) nach Anspruch 1, mit einer Vielzahl gepaarter Tellerfedern (22).

10. Schelle (10) nach Anspruch 1, bei welcher ein Schild (24) mit dem ersten Schlaufenende (14) gelenkig verbunden ist.

11. Schelle (10) nach Anspruch 10, bei welcher das Schild (24) einen Schienensteil (78) zum Führen der beweglichen ersten und zweiten Enden (16, 18) beinhaltet, wenn diese sich zueinander und voneinander weg während des Klemmens bewegen.

## Revendications

1. Collier de serrage (10) pour un tuyau flexible (26), le collier de serrage (10) comprenant une boucle (12) destinée à être disposée autour du tuyau flexible (26) et ayant des première et seconde extrémités en boucle (14, 16) espacées de manière axiale, chacune des première et seconde extrémités en boucle (14, 16) ayant une partie interne incurvée (48) disposée vers l'intérieur l'une de l'autre, le collier de serrage (10) comprenant :
un générateur de force (18) pour rassembler les première et seconde extrémités en boucle (14, 16) et comprenant au moins une rondelle Bellevile (22), un boulon (52) ayant une première extrémité de boulon (74) et une seconde extrémité de boulon (54), et un premier écrou de capture (56) monté dans la première extrémité en boucle (14) et un second écrou de capture (58) monté dans la seconde extrémité en boucle (16), le premier écrou de capture (56) comprenant un alésage axial non fileté (57) et le second écrou de capture (58) comprenant un alésage axial fileté (59), la première extrémité en boucle (14) comprenant des premier et deuxième trous (36, 38) situés dans leurs premières faces externe et interne (30, 29) respectives, et la seconde extrémité en boucle (16) comprend des troisième et quatrième trous (38, 36) situés dans leurs secondes faces externe et interne (30, 29) respectives, les trous (36, 38) étant axialement alignés les uns par rapport aux autres et les première et deuxième faces externes (30) étant coudées vers l'intérieur l'une vers l'autre, et les première et deuxième faces internes (29) étant incurvées et disposées vers l'intérieur l'une vers l'autre, le boulon (52) passant par les premier, deuxième, troisième et quatrième trous (36, 38) et comprenant une partie filetée (53) et une partie non filetée (55), la partie non filetée (55) s'étendant à travers et à distance de la première extrémité en boucle (14) ; et
un élément d'écartement (20) monté sur le boulon (52) entre la rondelle Belleville (22) et la première extrémité en boucle (14) pour transférer de manière axiale une force de serrage du générateur de force (18) aux première et seconde extrémités en boucle (14, 16), la rondelle Belleville (22) et l'élément d'écartement (20) étant montés sur la partie non filetée (55) avec la rondelle Belleville (22) qui est positionnée à proximité de la première extrémité de boulon (74),
et étant **caractérisé en ce que** chacun des premier et second écrous de capture (56, 58) a une extrémité incurvée (60) et une partie de tige (62), l'extrémité incurvée (60) coopérant avec une partie respective de l'une des parties incurvées (48) pour permettre à la force de serrage de rassembler axialement les première et seconde extrémités en boucle (14, 16) et de serrer le tuyau flexible (26) avec l'élément d'écartement (20) qui est en contact direct avec le premier écrou de capture (56).

2. Collier de serrage (10) selon la revendication 1, dans lequel l'élément d'écartement (20) comprend un collier cylindrique (64) avec un alésage axial (66) dimensionné pour loger le boulon (52) à l'intérieur de celui-ci, le collier cylindrique (64) ayant une extrémité de réception de force (67) et une extrémité de transfert de force (68).

3. Collier de serrage (10) selon la revendication 2, dans lequel la partie de tige (62) du premier écrou de capture (56) est disposée vers le premier trou (36) de la première extrémité en boucle (14) et vient en butée contre l'extrémité de transfert de force (68).

4. Collier de serrage (10) selon la revendication 3, dans lequel la seconde extrémité de boulon (75) comprend une butée (62a).

5. Collier de serrage (10) selon la revendication 4, dans lequel la butée (62a) est un écrou de blocage, un écrou Stover ou un écrou autofreiné à bague de nylon.

6. Collier de serrage (10) selon la revendication 5, dans lequel l'écrou Stover ou l'écrou autofreiné à bague de nylon sont solidaires de la partie de tige (62) du second écrou de capture (58).

7. Collier de serrage (10) selon la revendication 1, dans lequel le premier trou (36) de la première extrémité en boucle (14) est plus grand que le second trou (38) de la première extrémité en boucle (14).

8. Collier de serrage (10) selon la revendication 1, dans lequel la boucle de serrage (12), lorsqu'elle est observée en coupe, comprend une partie plane (15) et deux extrémités (13) qui sont coudées à distance de la surface du tuyau flexible (26).

9. Collier de serrage (10) selon la revendication 1, comprend une pluralité de rondelles Belleville (22) en paire.

10. Collier de serrage (10) selon la revendication 1, dans lequel une plaque (24) est raccordée de manière articulée à la première extrémité en boucle (14).

11. Collier de serrage (10) selon la revendication 10, dans lequel la plaque (24) comprend une partie de guidage (78) pour guider les première et seconde extrémités en boucle mobiles (16, 18) lorsqu'elles se déplacent vers et à distance l'une de l'autre pendant le serrage.
